# EUROPEAN PATENT APPLICATION

(11) **EP 0 550 378 A2**
(43) Date of publication of application: **07.07.1993**
(21) Application number: 92600005.0
(22) Date of filing: 21.09.1992
(51) Int. Cl.: B60R 25/00

(54) **Anti-theft car security system device.**

(30) Priority: 23.09.1991 GR 91010393
(71) Applicant: Lambrides, Gregorios of Zacharias, GR-177 78 Tavros, Attica (GR)
(72) Inventor: Lambrides, Gregorios of Zacharias, GR-177 78 Tavros, Attica (GR)

(57) **Abstract**

The antitheft system of the car's security consists from the basis (1), which has two (2) cuts (3 and 4), the cut (3) is scarved on a small moving slab (2) which slides stabily on the base (1), in the aforementioned two (2) cuts the two arms of the brakes and accelerator the base of the locket (6) are entering and in the cut incorporated security locket (6) a guide found on the base of the locket (6) in which it enters, slides and is held the moving pulling bar (5) and at the edge of the base of there is an inhibitor (STOP) (8) of the bar or axe which holds constantly the bar on the basis (constant dependense), but allowing at the same time to move (opens and closes) making a peripherical bow (8a) and from the bar (5).

If we place the base on the arms of the two pedals, i.e. brakes and accelerator with their insertion in the two (2) cuts and after the entering of the bar in the guide of the base from the locket's side and pushing it up to the end, to the inhibitor, we have simultaneous and automatic security - locking - of the incorporated locket and in the second case where the bar is constantly depended from the basis, at the placement of the basis on the arms of the pedals of brakes and accelerator is open and found under the arms of the pedals, pushing of the bar upwards, insetion to a small projection - guide of the security locket, and we have simultaneuous and automatic security-locking of the Incorporated locket, and so we have in boths (2) cases, the blocking of the brakes and accelerator between them and consequently the inactivity of both, as the independent and free movement of the one from the other is impossible.

## Description

This invention refers to an inviolable anti-theft device which concerns the dependent function of the brake in relation to the clutch and vice-versa, i.e. pressing one of the two pedals, either the brake or the clutch it forces the other one to follow the movement at the same time, due to the fact that through this anti-theft device the blocking of both (brake and clutch) is succeeded.

Antitheft device related to this or even one working on the same principal (blocking the two pedals) doesn't exist. There is an antitheft device which is based on a completely different principal andin specific it blocks both the steering-wheel system and the clutch by connecting these two with a bar in a shape of a crook.

The above mentioned anti-theft device axhibits the following deficiencies:
a) The placement and displacement of this device is inconvenient. In addition due to its shape and its length (60-70 cm. approx. ) it causes storing problems inside the car.
b) It causes scretches to the steering wheel.
c) The destruction of this bar, becomes an easy task,since half of this bar is consisted of a simple pipe. The destruction can be achieved by cutting the bar with a simple tool and thus the steering wheel and clutch get disconnected and free to use.

To the contrary the invention I'm applying for has the following advantages:
A. It has a small size thanks to its short length which is only 5 cm. longer than the distance between the two pedals (brake and clutch) i.e. 20-25 cm. approx.Total length depending on the car model.
B. Its easy to use because placing and displacing it is very handy. Moreover because of its small size its easy to be kept inside the car.
C. Its absolutely impossible to be neutralized or cut using any of the existing tools and machines (saw oxygen device..) because there is lack of space where it is placed for someone to work upon it.

On the other hand the invention is made of solid steel which makes it very strong and resistant.

20. The construction of the whole security system is of massive steel and is consisted of: (see enclosed two plans No. 1 and No. 2).

1.- The base (1) which has two (2) cuts (3 and 4).The cut (3) is scarved on a small moving slab (2) which slides stabily on the base (1) and so we get the increase and decrease of the separation between the two (2) cuts resulting to the complete and total matching of the security objects in all the marks and all the models of cars. In the two (2) aforementioned cuts the two arms of the brakes and accelerator (bebrayage), the base of the locket (6) are entering and in the cut corporated security locket (7), a guide found on the base of the locket (6) in which it enters, slides and is held the moving pulling bar (5) and at the edge of the base of the inhabitor (STOP) (8) of the entering and pulling bar in the plan No. 1 or axe which holds permanently the bar (5) on the base allowing at the same time the movement (opens and closes) andmaking a peripherical bow (8a) in the plan "2" and 2.The bar (5).

The use and operation of the above described anti-thief security system is suggested in the placement of the base on the arms of the two pedals, of the brake and accelerator with the insertion of then in the two (2) cuts (4 stable and 3 moving) after the insertion of the bar (5) in the guide of the base of the locket (6) from the security locket side (7) and pushing of the bar (5) up to the end to the inhabitor (STOP) (8), for the plan "+" and so we have simultaneous and automatic security-locking of the coordinated locket (7) and for the plan "2", where the bar (5) is open (in place 5a) and found underneeth the two (2) arms of the brake and accelerator during the placement of the basis (1) on the arms, pushing of the bar upwards (to the bow's direction B), Insertion to a small projection - guide - of the security locket, so we have the simultaneous and automatic security-locking- of the incorporated locket (7), and so we succeed in both cases, of the blocking of the brakes and accelerator between them with consequense the inactivity of both.

At the same time, instead of the incorporated security locket the use of an independent-moving locket is possible, which after the insertion or the closing, it depends on the case, of the bar will secure the system the ring of the locket entering in two (2) holes found on the base the one and on the bar the other hole.

Furtheromore it's possible the addition,at the bottom-side of the base (which faces the bottom of the car),of the above described anti-theft device, of an interseptor (5), which can be placed between the floor and both the pedals thus making impossible even the slightest movement of these pedals °brake and clutch).Finally, it's possible the achievement of the same principal, concerning the dependent use and functioning of the brake related to the clutch and vice-versa, through the placement on each arm of the pedals independent tighting rings, inside of which the bar enters to be locked by a pad lock either embodied on the device itself or individual, instead of the above used base for the similtaneous blocking of the two pedals (brake and clutch).

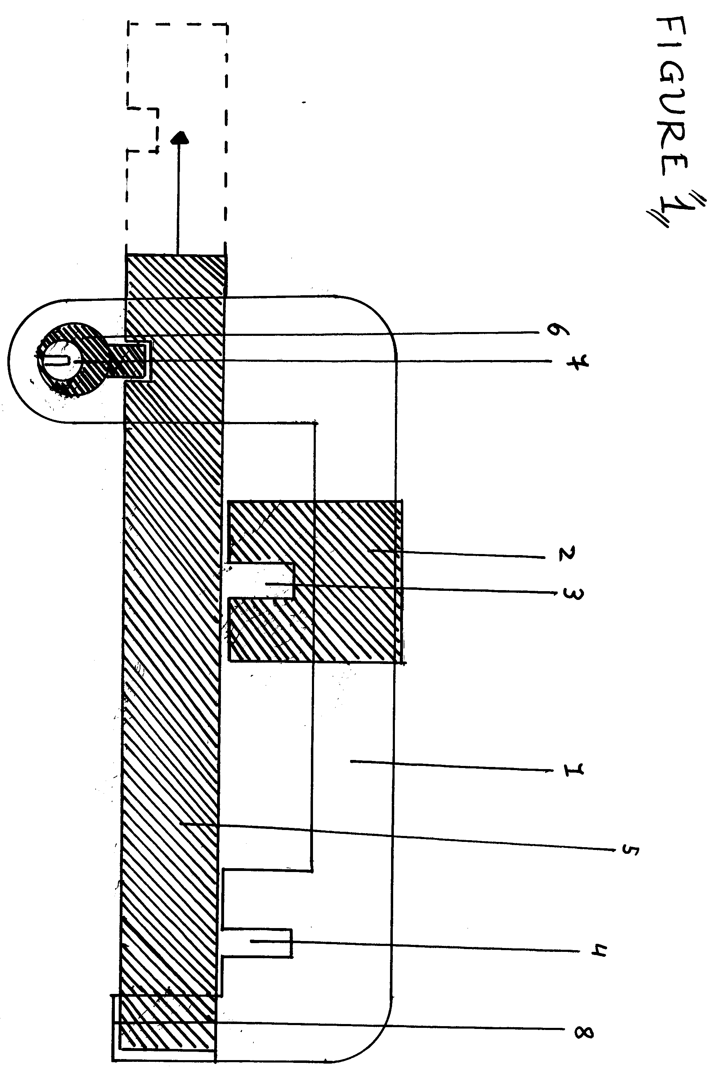

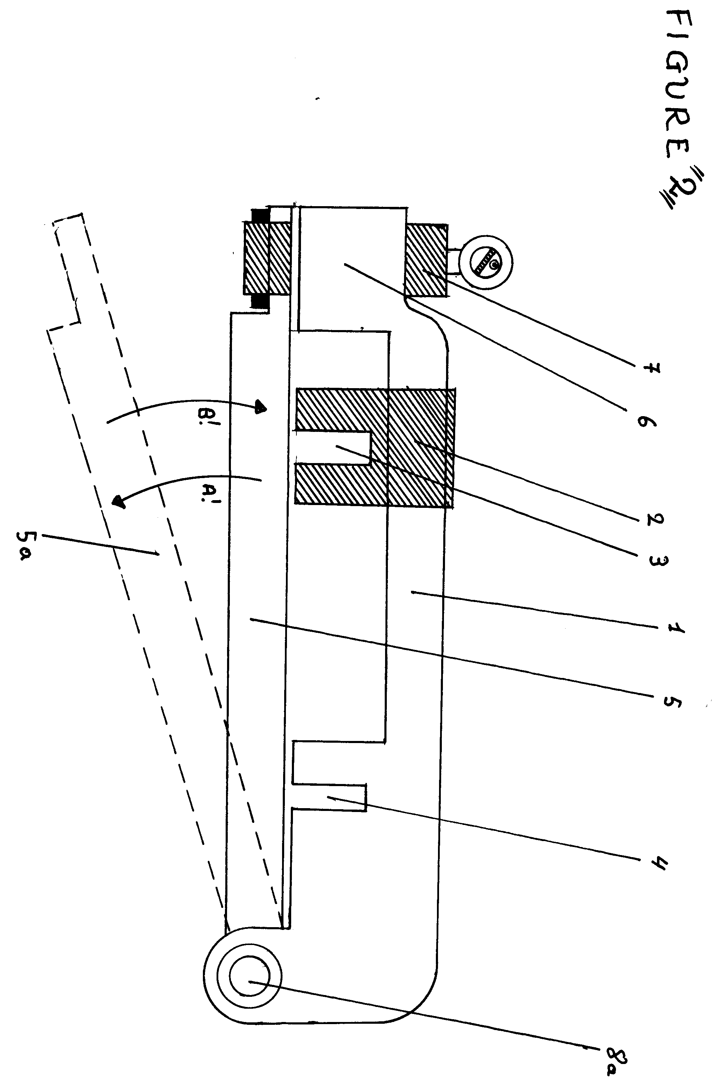

## Claims

**1)** The characterisitc of the car anti-theft device is the principal on which it is based and on which it functions that is the achievement of the dependent function of the brake in relation to the clutch and vice-versa,by blocking both of them, one to each-other thus neutralizing them. It is made of solid steel and consists of:
a) From the basis (1) which has two (2) cuts (3 and 4), the cut (3) is scarved on small moving slab (2) which slides stabily on the basic (1), basis of the locket (6) and inside incorporated security locket (7), a guide found on the basis of the locket and on the edge of the inhibitor (STOP) (8) or axe - (8a) (on the plan "2") and
b) from the bar (5).

**2)** The anti-theft device according to the claim 1)which instead of an embodied safety lock is possible the use of a removable pad lock.

**3)** Anti-theft device according to the claims 1) and 2) which has an extra interseptor at the down side of the base (facing the bottom of the car) which being between the base and the floor of the car does not allow the slightest movement of the brake and the clutch pressing on them.

**4)** Anti-theft device according to the claims 1) 2) 3) which instead of the base which simultaneously blocks the two pedals (brake and clutch) works with two tighting rings, on the arms of the two pedals, in which (tighting rings) the bar enters and then locks with a pad lock either with a removable or an embodied lock.
